# EUROPÄISCHE PATENTSCHRIFT

(11) **EP 3 358 021 B1**
(45) Veröffentlichungstag und Bekanntmachung des Hinweises auf die Patenterteilung: **13.05.2020**
(21) Anmeldenummer: 18151127.0
(22) Anmeldetag: 11.01.2018
(51) Int. Cl.: C21D 8/06, C21D 9/00, C21D 1/25

(54) **HOCHFESTE SCHRAUBE MIT EINEM ENTHÄRTETEN GEWINDEENDE**
HIGH-STRENGTH SCREW WITH A SOFTENED STUD
VIS À HAUTE RÉSISTANCE AYANT UNE EXTRÉMITÉ FILETÉE MOINS DURE

(30) Priorität: 01.02.2017 DE 102017101931
(43) Veröffentlichungstag der Anmeldung: 08.08.2018
(73) Patentinhaber: KAMAX Holding GmbH & Co. KG, 35315 Homberg (Ohm) (DE)
(72) Erfinder: Wagner, Frank, 35418 Großen Buseck (DE); Frischkorn, Harald, 35315 Homberg (Ohm) (DE)
(74) Vertreter: Müller Schupfner & Partner Patent- und Rechtsanwaltspartnerschaft mbB

(56) Entgegenhaltungen:
- EP-A1- 1 466 990
- EP-B1- 0 861 379
- DE-A1- 2 831 439
- DE-B4-112010 003 614

## Beschreibung

### TECHNISCHES GEBIET DER ERFINDUNG

Die Erfindung betrifft eine hochfeste Schraube mit einem Kopf und einem Gewindeabschnitt mit einem Gewinde mit einem in axialer Richtung von dem Kopf weg weisenden Gewindeende.

### STAND DER TECHNIK

Eine ultrahochfeste Schraube ist aus der europäischen Patentanmeldung EP 2 594 653 A1 bekannt.

Ein Verfahren zur Herstellung einer hochfesten Schraube sowie eine hochfeste Schraube sind aus dem Dokument WÜRTH: "Herstellung von Schrauben und Muttern" (Seiten 1773-1776) bekannt. Durch Umformung wird ein Rohling mit einem Kopf und einem Schaft hergestellt. Anschließend erfolgt eine Wärmebehandlung des Rohlings zur Erreichung einer erhöhten Härte. Bei dieser Wärmebehandlung handelt es sich um Vergüten, welches die Teilschritte des Härtens und des nachfolgenden Anlassens aufweist. Das Gewinde wird durch Umformung vor oder nach dem Vergüten erzeugt. Ähnliche Verfahren sind aus jedem von DE 11 2010 003 614 und EP-0 861 379 bekannt.

### AUFGABE DER ERFINDUNG

Der Erfindung liegt die Aufgabe zugrunde, eine hochfeste oder ultrahochfeste Schraube bereitzustellen, die mit weniger Werkzeugverschleiß beim Gewinderollen vollständig spanlos herstellbar ist.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft eine hochfeste Schraube mit einem Kopf und einem Gewindeabschnitt mit einem Gewinde mit einem in axialer Richtung von dem Kopf weg weisenden Gewindeende. Der Gewindeabschnitt weist einen Enthärtungsbereich auf, der von dem Gewindeende ausgeht und sich in axialer Richtung erstreckt. Der Enthärtungsbereich weist eine im Vergleich zu einem axialen Mittelbereich des Gewindeabschnitts um mindestens 50 HV reduzierte Härte auf.

Die Erfindung betrifft weiterhin ein Verfahren zum Herstellen einer hochfesten Schraube mit den folgenden Schritten:
- Herstellen eines Rohlings mit einem Kopf und einem Schaft durch Umformung,
- Wärmebehandlung des Rohlings zur Erreichung einer erhöhten Härte,
- Reduzieren der Härte des Schafts in einem Enthärtungsbereich, der von einem axialen Bereich des Schafts ausgeht, in dem sich später das von dem Kopf weg weisende Gewindeende befindet, und sich in axialer Richtung nur über einen Teil eines axialen Bereichs des Schafts erstreckt, in dem sich später der Gewindeabschnitt befindet, derart, dass der Enthärtungsbereich eine im Vergleich zu einem axialen Mittelbereich des Gewindeabschnitts um mindestens 50 HV reduzierte Härte aufweist. und
- Herstellen eines Gewindeabschnitts durch Umformung eines Gewindes in dem Bereich des Schafts.

Diese Verfahrensschritte werden in der angegebenen Reihenfolge durchgeführt. Es ist aber möglich, dass zwischen den Verfahrensschritten weitere Schritte durchgeführt werden.

Unter einer hochfesten Schraube wird eine Schraube mit einer Zugfestigkeit Rₘ von mindestens 800 N/mm² verstanden. Unter hochfesten Schrauben werden im Wesentlichen Schrauben der Festigkeitsklassen 8.8, 9.8, 10.9 und 12.9 verstanden. Es kann sich bei der erfindungsgemäßen hochfesten Schraube aber auch um eine ultrahochfeste Schraube mit einer Zugfestigkeit Rₘ von mindestens 1400 N/mm² handeln. Diese gehören meist den Festigkeitsklassen 14.8, 15.8 oder 16.8 an. Die erfindungsmäße "hochfeste" Schraube ist also im Folgenden mindestens eine hochfeste Schraube, kann aber auch eine ultrahochfeste Schraube sein.

Bei der neuen hochfesten Schraube kann es sich z. B. um eine Schraube mit einem Gewindeabschnitt handeln, dessen dem Kopf der Schraube zugewandter axialer Endbereich und dessen axialer Mittelbereich einer ultrahochfesten Schraube, dessen Enthärtungsbereich aber "nur" einer hochfesten Schraube zuzuordnen ist.

Unter dem nicht feststehenden Fachbegriff des Enthärtungsbereichs wird in dieser Anmeldung der axiale Teilbereich des Gewindeabschnitts der Schraube angesehen, der eine im Vergleich zum Rest des (nicht enthärteten) Gewindeabschnitts reduzierte Härte aufweist. Der Begriff der Enthärtung bringt dabei zum Ausdruck, dass die Härte reduziert wurde. Er bedeutet insbesondere nicht zwingend, dass ein zuvor durchgeführtes Härten vollständig rückgängig gemacht wurde.

Die Härte und Zugfestigkeit wird also in dem Endbereich des Gewindeabschnitts der Schraube reduziert, der von dem Kopf der Schraube weg weist. In vielen Fällen handelt es sich dabei um das axiale Ende der Schraube. Es ist aber auch möglich, dass der Gewindeabschnitt nicht an dem axialen Ende der Schraube, sondern an einer beliebigen Stelle zwischen dem axialen Ende und dem Kopf der Schraube angeordnet ist. Der Enthärtungsbereich erstreckt sich in beiden Fällen von diesem Ende des Gewindeabschnitts - also dem Gewindeeinlauf - über eine gewisse axiale Länge des Gewindeabschnitts. Er erstreckt sich aber nicht über die gesamte Länge des Gewindeabschnitts.

In dem Enthärtungsbereich liegt durchschnittlich eine Härte und Zugfestigkeit vor, die geringer als die durchschnittliche Härte und Zugfestigkeit in dem Rest des Gewindeabschnitts ist. Um die Bezugnahme im Unterschied zu dem Begriff des "Rests" des Gewindeabschnitts zu verbessern, wird in dieser Anmeldung hierfür auf den axialen Mittelbereich des Gewindeabschnitts abgestellt.

Durch den neuen Enthärtungsbereich im Bereich dieses Gewindeendes erfolgt eine Entlastung der Schraube in mehrfacher Weise. Diese Entlastung betrifft insbesondere die Kuppe dieses Gewindeendes - d. h. den axialen Bereich des Gewindeeinlaufs, in dem der Außendurchmesser des Gewindes erstmalig seine maximale Größe erreicht. Im Bereich dieser Kuppe treten im Stand der Technik verschiedene Probleme auf. Zunächst einmal liegt hier eine ungleichmäßige Kraftverteilung vor, die auf die Gewindeflanken an dem Rollwerkzeug beim Herstellen des Gewindes einwirkt. Hierdurch erfolgt im Stand der Technik ein erhöhter Verschleiß an dem Rollwerkzeug.

Ein weiteres Problem im Stand der Technik stellt die Dauerbruchgefährdung am verschraubten Bauteil im Bereich des korrespondierenden Innengewindes dar. Hier liegt eine Spannungskonzentration aufgrund der Gewindespitze des Gewindes der Schraube vor.

Erfindungsgemäß kommt es an dieser Kuppe im Bereich des Gewindeeinlaufs aufgrund der reduzierten Härte und Zugfestigkeit des Gewindeabschnitts der neuen Schraube zu einer geringeren Belastung sowohl beim Herstellen des Gewindes als auch beim Verschrauben des Gewindes. Es kommt also zu einem geringeren Verschleiß an den Rollwerkzeugen und zu weniger Beschädigungen und Brüchen an dem verschraubten Bauteil.

Aufgrund des neuen Enthärtungsbereichs ist es möglich, selbst ultrahochfeste Schrauben in einem einstufigen Rollverfahren herzustellen. Das im Stand der Technik verwendete zweistufige Gewinderollen kann entfallen. Auch andere im Stand der Technik verwendete zerspanende Verfahren zur Reduzierung der Spannungskonzentration im Bauteil sind nicht erforderlich.

Die Dauerhaltbarkeit der neuen hochfesten Schraube - insbesondere der neuen ultrahochfesten Schraube - wird dadurch im Vergleich zum Stand der Technik wesentlich verbessert. Es sind beispielsweise Erhöhungen der Dauerfestigkeit δ_{A50} um etwa zwischen 20 N/mm² und 50 N/mm² auf etwa 150 N/mm² oder mehr möglich.

Die Härte des Enthärtungsbereichs ist im Vergleich zu dem axialen Mittelbereich des Gewindeabschnitts um mindestens 50 HV geringer. Sie kann zwischen 50 HV und 300 HV, insbesondere zwischen 100 HV und 250 HV, geringer sein. Die Zugfestigkeit des Enthärtungsbereichs kann im Vergleich zu dem axialen Mittelbereich des Gewindeabschnitts um mindestens 100 N/mm² geringer sein. Sie kann um zwischen 100 N/mm² und 700 N/mm², insbesondere zwischen 200 N/mm² und 500 N/mm², geringer sein.

Die Härte des Enthärtungsbereichs kann im Vergleich zu dem axialen Mittelbereich des Gewindeabschnitts um zwischen 15 % und 50 %, insbesondere zwischen 20 % und 40 %, geringer sein. Die Zugfestigkeit des Enthärtungsbereichs kann im Vergleich zu dem axialen Mittelbereichs des Gewindeabschnitts um zwischen 15 % und 50 %, insbesondere zwischen 20 % und 40 % geringer sein.

Diese zahlenmäßigen Reduzierungen der Härte und Zugfestigkeit des Gewindeabschnitts in dem Enthärtungsbereich führen dazu, dass hier bei der Herstellung des Gewindes ein geringerer Verschleiß an dem Rollwerkzeug auftritt. Ebenso kommt es zu einem verringerten Bauteilversagen beim Verschrauben der Schraube mit einem Bauteil.

Der Enthärtungsbereich erstreckt sich dabei nur über eine axiale Teillänge des Gewindeabschnitts. Diese Teillänge überdeckt das kopfabgewandte Gewindeende und die Kuppe des Gewindeeinlaufs - d. h. den sich entsprechend der Steigung des Gewindes um den Umfang der Schraube windenden Bereich, in dem der maximale Außendurchmesser des Gewindes erstmalig erreicht wird.

Damit mindestens dieser Bereich der Kuppe von dem Enthärtungsbereich umfasst ist, kann sich der Enthärtungsbereich über eine Länge von mindestens dem Doppelten, insbesondere mindestens dem Dreifachen, der Steigung des Gewindes erstrecken. Anders gesagt hat sich das Gewinde der Schraube hier zwei Mal bzw. drei Mal vollständig um die Schraube gewunden.

Damit das Gewinde die gewünschten positiven Effekte der hohen Härte und Zugfestigkeit nicht vollständig verliert, endet der Enthärtungsbereich mindestens vor dem axialen Mittelbereich des Gewindeabschnitts. Die Länge des Enthärtungsbereichs kann maximal dem Achtfachen, insbesondere maximal dem Siebenfachen, insbesondere maximal dem Sechsfachen, der Steigung des Gewindes entsprechen. Hiermit ist hinreichend sichergestellt, dass der Bereich des Gewindeabschnitts umfasst ist, in dem ansonsten die oberhalb beschriebenen negativen Effekte beim Herstellen des Gewindes und beim Verschrauben der Schraube auftreten würden. Der Rest des Gewindes weist die gewünschte hohe Härte und Zugfestigkeit auf, die man von dieser hochfesten Schraube erwartet.

Das Gewinde kann in dem Enthärtungsbereich die übliche Normausbildung aufweisen. Dies bedeutet, dass dort ein üblicher Gewindeeinlauf vorhanden ist. Es sind dort keine anderen besonderen geometrischen Maßnahmen vorhanden, wie beispielsweise Bohrungen oder zusätzliche Fasen. Die übliche Fase am Ende des Gewindeauslaufs und des Schafts ist aber vorhanden. Die Entlastung des Gewindeeinlaufs kann also ausschließlich durch den Enthärtungsbereich erfolgen.

Bei dem oberhalb beschriebenen Verfahren zum Herstellen einer hochfesten Schraube kann das Reduzieren der Härte durch induktives Erwärmen des Rohlings erfolgen. Dies erfolgt insbesondere mittels einer stromführenden Spule, die einem elektromagnetischen Wechselfeld ausgesetzt ist und im Material des Schraubenrohlings Wirbelströme erzeugt. Da diese entgegengesetzt zum ursprünglichen Strom fließen, entsteht Wärme.

An das induktive Erwärmen des Rohlings kann sich ein Kühlen des Rohlings anschließen. Dies ist insbesondere dann vorteilhaft, wenn die Erwärmung des Stahls auf eine Temperatur unterhalb des Beginns der Austenitumwandlung Ac1 von zwischen 500 °C und 750 °C, insbesondere zwischen 600 °C und 723 °C, begrenzt wird. Durch die Koordinierung der Schritte des Erwärmens und des Kühlens wird die gewünschte Reduzierung der Härte und Festigkeit erreicht. Das Kühlen erfolgt insbesondere durch Wasser mit einer Temperatur von etwa 10 °C bis etwa 50 °C. Es kann über eine Zeitspanne von zwischen etwa 0,05 s und 30 s, insbesondere zwischen etwa 0,1 s und 10 s, erfolgen.

Das induktive Erwärmen kann mit einer Frequenz von zwischen 20 kHz und 500 kHz, insbesondere zwischen etwa 100 kHz und 400 kHz, erfolgen.

Das induktive Erwärmen kann über eine Zeitspanne von zwischen etwa 0,05 s und 30 s, insbesondere zwischen etwa 0,1 s und 10 s, erfolgen.

Das Reduzieren der Härte durch Erwärmen des Rohlings kann aber auch beispielsweise mit einem Laser erfolgen. Auch an dieses Erwärmen kann sich insbesondere ein geregeltes Kühlen zur Erreichung der gewünschten Reduzierung der Härte des Enthärtungsbereichs anschließen.

Bei allen oberhalb beschriebenen Verfahrensschritten kann die Schraube weiterhin eines oder mehrere der oberhalb beschriebenen Merkmale aufweisen.

Bei der Wärmebehandlung kann es sich insbesondere um Bainitisieren handeln. Bei der Umformung zum Herstellen des Gewindeabschnitts kann es sich insbesondere um Rollen oder Walzen handeln. Es kann sich insbesondere um eine Kaltumformung handeln.

Die neue hochfeste Schraube kann ein Bainitgefüge aufweisen, welches insbesondere zumindest teilweise durch Bainitisieren erzeugt wurde. Das Bainitgefüge führt zu einer sehr hohen Zugfestigkeit bei einer ebenfalls sehr hohen Duktilität. Diese hohe Duktilität oder Zähigkeit unterscheidet das Bainitgefüge wesentlich von einem Martensitgefüge, welches im Stand der Technik in bekannter Weise durch Härten mit anschließendem Anlassen erzeugt wird. Bei dem Zwischenstufenvergüten erfolgt die Härtung stattdessen durch ein schnelles Abkühlen aus der Austenitphase durch eine isothermische Gefügeumwandlung in der Bainitstufe. Dabei verweilt das Teil, insbesondere die Schraube, bei einer isothermen Temperatur im Salzbad, bis die Gefügeumwandlung vom Austenit zum Bainit über den gesamten Querschnitt abgeschlossen ist. Der bei der martensitischen Härtung erforderliche Anlassvorgang kann vorzugsweise entfallen. Damit wird auch die Neigung zum Härteverzug verringert.

Das für die Herstellung der hochfesten Schraube verwendete Ausgangsmaterial wird üblicherweise als "Draht" bezeichnet. Der für die neue hochfeste Schraube verwendete Draht kann aus kaltumformbarem unvergüteten Stahl bestehen und einen Kohlenstoffgehalt von etwa 0,2 % bis 0,6 % oder etwa 0,2 % bis 0,5 % besitzen. Der Stahl kann Legierungsanteile, insbesondere Cr, Mo, Mn, Ni, V, Nb oder Ti von insbesondere insgesamt mehr als etwa 1,1 % aufweisen.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Enthärtungsbereich die Rede ist, ist dies so zu verstehen, dass genau ein Enthärtungsbereich, zwei Enthärtungsbereiche oder mehr Enthärtungsbereiche vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Ansicht einer beispielhaften Ausführungsform einer neuen hochfesten Schraube.
- **Fig. 2**: zeigt das Detail A des Gewindeabschnitts der Schraube gemäß Fig. 1.
- **Fig. 3**: zeigt eine Schnittansicht der Schraube gemäß Fig. 1.
- **Fig. 4**: zeigt das Detail B des Gewindeabschnitts der Schraube gemäß Fig. 3.

### FIGURENBESCHREIBUNG

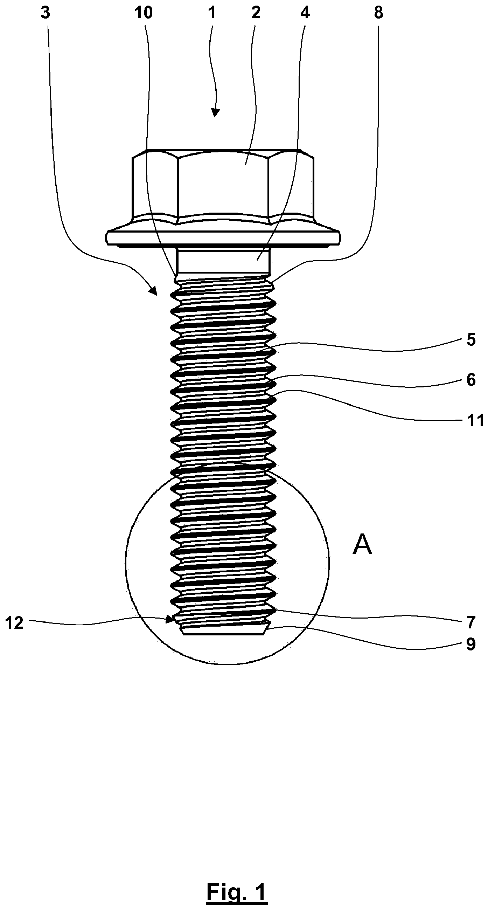

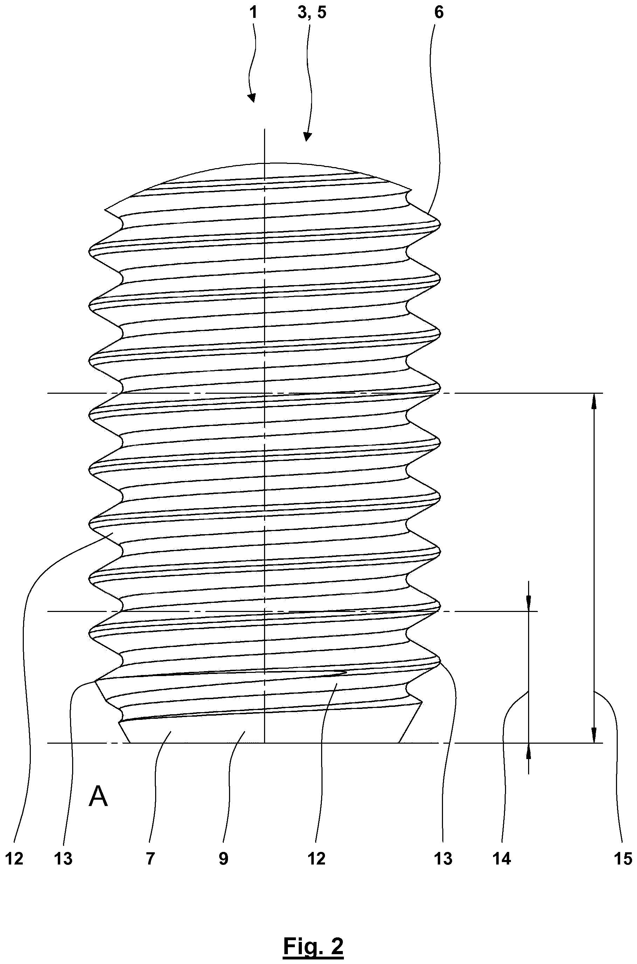

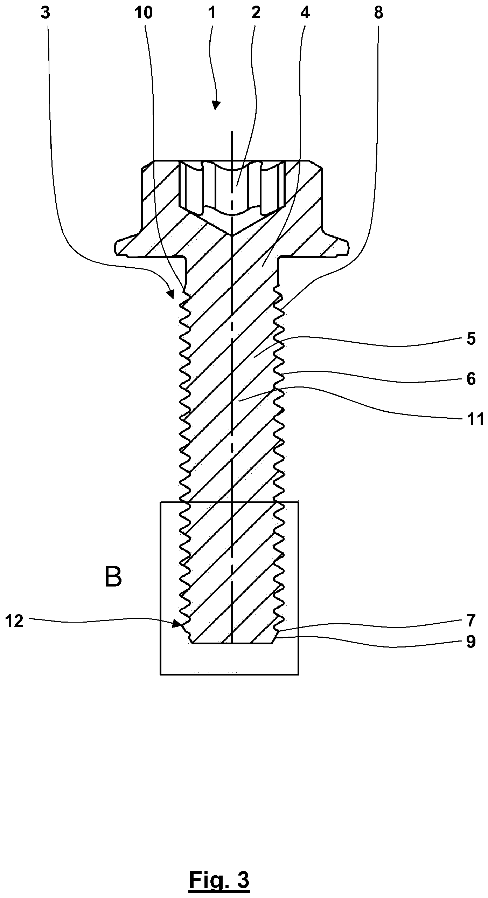

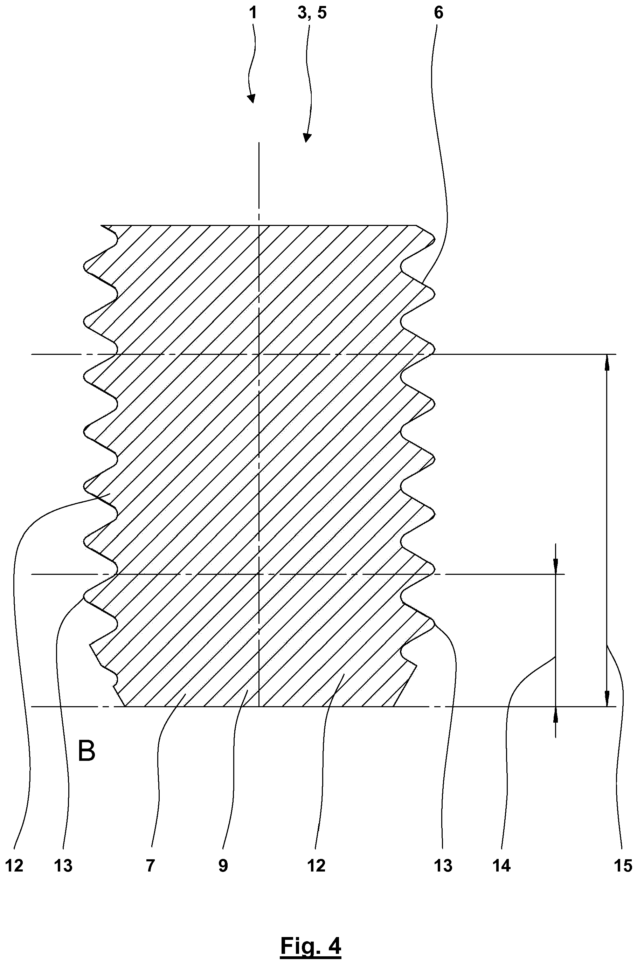

**Fig. 1-4** zeigen verschiedene Ansichten einer beispielhaften Ausführungsform einer neuen hochfesten Schraube 1. Bei der Schraube 1 handelt es sich um eine hochfeste Schraube 1 mit einer Zugfestigkeit von mindestens 800 N/mm², insbesondere eine ultrahochfeste Schraube 1 mit einer Zugfestigkeit von mindestens 1400 N/mm². Die Schraube 1 weist ein insbesondere durch Zwischenstufenvergüten erzeugtes Bainitgefüge auf, welches sich im Wesentlichen über den gesamten Querschnitt der Schraube 1 erstreckt.

Die Schraube 1 weist einen Kopf 2 und einen Schaft 3 auf. Der Kopf 2 weist eine übliche Werkzeugangriff-Kontur auf. Der Schaft 3 weist einen gewindefreien Schaftabschnitt 4 und einen Gewindeabschnitt 5 mit einem Gewinde 6 auf. Das Gewinde 6 ist hier als metrisches Gewinde ausgebildet. Es könnte sich aber auch um ein anderes Gewinde 6 handeln.

Der Gewindeabschnitt 5 weist einen Gewindeeinlauf 7 und einen Gewindeauslauf 8 auf. Er weist weiterhin ein von dem Kopf 2 weg weisendes Gewindeende 9 und ein dem Kopf 2 zugewandtes Gewindeende 10 auf. Dementsprechend befindet sich mittig zwischen den beiden Gewindeenden 9, 10 ein axialer Mittelbereich 11 des Gewindeabschnitts 5.

Wie nun durch das Bezugszeichen 12 angedeutet ist, weist der Gewindeabschnitt 5 einen Enthärtungsbereich 12 auf. Der Enthärtungsbereich 12 geht von dem Gewindeende 9 aus und erstreckt sich in axialer Richtung über eine axiale Teillänge des Gewindeabschnitts 5. In dem Enthärtungsbereich 12 liegt eine im Vergleich zu dem axialen Mittelbereich 11 des Gewindeabschnitts 5 reduzierte Härte und Zugfestigkeit vor. Die Härte des Enthärtungsbereichs 12 kann im Vergleich zu dem axialen Mittelbereich 11 des Gewindeabschnitts 5 um zwischen 15 % und 50 % geringer sein.

Der Enthärtungsbereich 12 erstreckt sich in axialer Richtung mindestens bis über eine Kuppe 13 des Gewindeabschnitts 5 hinweg, d. h. dem Bereich des Gewindeabschnitts 5, in dem das Gewinde 6 erstmalig seinen maximalen Außendurchmesser erreicht.

Wie anhand der beiden Linien 14, 15 beispielhaft verdeutlicht ist, kann sich der Enthärtungsbereich 12 im Sinne der Linie 14 über eine minimale Länge von mindestens dem Dreifachen der Steigung des Gewindes 6 erstrecken.

Gemäß der Linie 15 kann sich der Enthärtungsbereich 12 über eine maximale Länge erstrecken, die maximal dem Sechsfachen der Steigung des Gewindes 6 entspricht. Es versteht sich, dass aber auch andere Zahlenwerte und insbesondere die weiteren in dieser Anmeldung genannten Zahlenwerte Anwendung finden können.

### BEZUGSZEICHENLISTE

- 1: Schraube
- 2: Kopf
- 3: Schaft
- 4: Schaftabschnitt
- 5: Gewindeabschnitt
- 6: Gewinde
- 7: Gewindeeinlauf
- 8: Gewindeauslauf
- 9: Gewindeende
- 10: Gewindeende
- 11: axialer Mittelbereich
- 12: Enthärtungsbereich
- 13: Kuppe
- 14: Linie
- 15: Linie

## Patentansprüche

1. Hochfeste Schraube (1) mit einem Kopf (2) und einem Gewindeabschnitt (5) mit einem Gewinde (6) mit einem in axialer Richtung von dem Kopf (2) weg weisenden Gewindeende (9), **dadurch gekennzeichnet, dass** der Gewindeabschnitt (5) einen Enthärtungsbereich (12) aufweist, der von dem Gewindeende (9) ausgeht und sich in axialer Richtung erstreckt, wobei der Enthärtungsbereich (12) eine im Vergleich zu einem axialen Mittelbereich (11) des Gewindeabschnitts (5) um mindestens 50 HV reduzierte Härte aufweist.

2. Schraube (1) nach Anspruch 1, **dadurch gekennzeichnet, dass** die Härte des Enthärtungsbereichs (12) im Vergleich zu dem axialen Mittelbereich (11) des Gewindeabschnitts (5) um zwischen 50 HV und 300 HV, insbesondere zwischen 100 HV und 250 HV, geringer ist.

3. Schraube (1) nach mindestens einem der vorhergehenden Ansprüche, **dadurch gekennzeichnet, dass** die Zugfestigkeit des Enthärtungsbereichs (12) im Vergleich zu dem axialen Mittelbereich (11) des Gewindeabschnitts (5) um mindestens 100 N/mm² geringer ist.

4. Schraube (1) nach Anspruch 3, **dadurch gekennzeichnet, dass** die Zugfestigkeit des Enthärtungsbereichs (12) im Vergleich zu dem axialen Mittelbereich (11) des Gewindeabschnitts (5) um zwischen 100 N/mm² und 700 N/mm², insbesondere zwischen 200 N/mm² und 500 N/mm², geringer ist.

5. Schraube (1) nach mindestens einem der vorhergehenden Ansprüche, **dadurch gekennzeichnet, dass**
die Härte des Enthärtungsbereichs (12) im Vergleich zu dem axialen Mittelbereich (11) des Gewindeabschnitts (5) um zwischen 15 % und 50 %, insbesondere zwischen 20 % und 40 %, geringer ist, und/oder
die Zugfestigkeit des Enthärtungsbereichs (12) im Vergleich zu dem axialen Mittelbereich (11) des Gewindeabschnitts (5) um zwischen 15 % und 50 %, insbesondere zwischen 20 % und 40 %, geringer ist.

6. Schraube (1) nach mindestens einem der vorhergehenden Ansprüche, **dadurch gekennzeichnet, dass** sich der Enthärtungsbereich (12) über eine Länge von mindestens dem Doppelten, insbesondere mindestens dem Dreifachen, der Steigung des Gewindes (6) erstreckt.

7. Schraube (1) nach Anspruch 6, **dadurch gekennzeichnet, dass** die Länge des Enthärtungsbereichs (12) maximal dem Achtfachen, insbesondere maximal dem Siebenfachen, insbesondere maximal dem Sechsfachen, der Steigung des Gewindes (6) entspricht.

8. Schraube (1) nach mindestens einem der vorhergehenden Ansprüche, **dadurch gekennzeichnet, dass** das Gewinde (6) in dem Enthärtungsbereich (12) die übliche Normausbildung aufweist und dort insbesondere keine Bohrung angeordnet ist.

9. Schraube (1) nach mindestens einem der vorhergehenden Ansprüche, **dadurch gekennzeichnet, dass** die Schraube (1) ein Bainitgefüge aufweist.

10. Verfahren zum Herstellen einer hochfesten Schraube (1), (1) nach mindestens einem der vorhergehenden Ansprüche, mit den Schritten:
Herstellen eines Rohlings mit einem Kopf (2) und einem Schaft (3) durch Umformung,
Wärmebehandeln des Rohlings zur Erreichung einer erhöhten Härte,
Reduzieren der Härte des Schafts (3) in einem Enthärtungsbereich (12), der von einem axialen Bereich des Schafts (3) ausgeht, in dem sich später das von dem Kopf (2) weg weisende Gewindeende (9) befindet, und sich in axialer Richtung nur über einen Teil eines axialen Bereichs des Schafts (3) erstreckt, in dem sich später der Gewindeabschnitt (5) befindet, derart, dass der Enthärtungsbereich (12) eine im Vergleich zu einem axialen Mittelbereich (11) des Gewindeabschnitts (5) um mindestens 50 HV reduzierte Härte aufweist, und
Herstellen des Gewindeabschnitts (5) durch Umformung eines Gewindes (6) in dem Bereich des Schafts (3).

11. Verfahren nach Anspruch 10, **dadurch gekennzeichnet, dass** das Reduzieren der Härte durch induktives Erwärmen des Rohlings erfolgt.

12. Verfahren nach Anspruch 10 oder 11, **dadurch gekennzeichnet, dass** das induktive Erwärmen
mit einer Frequenz von zwischen etwa 20 kHz und 500 kHz, insbesondere zwischen etwa 100 kHz und 400 kHz, erfolgt, und/oder
über eine Zeitspanne von zwischen etwa 0,05 s und 30 s, insbesondere zwischen etwa 0,1 s und 10 s, erfolgt.

13. Verfahren nach mindestens einem der Ansprüche 10 bis 12, **dadurch gekennzeichnet, dass** die Wärmebehandlung des Rohlings zur Erreichung die erhöhten Härte das Bainitisieren zur Erzeugung eines Bainitgefüges aufweist.

14. Verfahren nach mindestens einem der Ansprüche 10 bis 13, **dadurch gekennzeichnet, dass** das Reduzieren der Härte durch Erwärmen des Rohlings mit einem Laser erfolgt.

## Claims

1. A high-strength screw (1) having a head (2) and a threaded portion (5) having a thread (6) with a threaded end (9) facing away from the head (2) in an axial direction, **characterized in that** the threaded portion (5) has a softening section (12) starting from the threaded end (9) and extending in the axial direction, the softening section (12) having a reduced hardness by at least 50 HV compared to an axial central section (11) of the threaded section (5).

2. Screw (1) according to claim 1, **characterized in that** the hardness of the softening section (12) is lower by between 50 HV and 300 HV, in particular between 100 HV and 250 HV, compared to the axial central section (11) of the threaded portion (5).

3. Screw (1) according to at least one of the preceding claims, **characterized in that** the tensile strength of the softening section (12) is lower by at least 100 N/mm² compared to the axial central section (11) of the threaded portion (5).

4. Screw (1) according to claim3, **characterized in that** the tensile strength of the softening section (12) is lower by between 100 N/mm² and 700 N/mm², in particular between 200 N/mm² and 500 N/mm², compared to the axial central section (11) of the threaded portion (5).

5. Screw (1) according to at least one of the preceding claims, **characterized in that** the hardness of the softening section (12) is lower by between 15% and 50%, in particular between 20% and 40%, compared to the axial central section (11) of the threaded portion (5), and/or the tensile strength of the softening section (12) is lower by between 15% and 50%, in particular between 20% and 40%, compared to the axial central section (11) of the threaded portion (5).

6. Screw (1) according to at least one of the preceding claims, **characterized in that** the softening section (12) extends over a length of at least twice, in particular at least three times, the pitch of the thread (6).

7. Screw (1) according to claim 7, **characterized in that** the length of the softening section (12) corresponds to a maximum of eight times, in particular a maximum of seven times, in particular a maximum of six times, the pitch of the thread (6).

8. Screw (1) according to at least one of the preceding claims, **characterized in that** the thread (6) in the softening section (12) has the usual standard configuration and in particular no bore is arranged there.

9. Screw (1) according to at least one of the preceding claims, **characterized in that** the screw (1) has a bainite structure.

10. Method for producing a high-strength screw (1) according to at least one of the preceding claims, comprising the steps:
producing a blank with a head (2) and a shank (3) by forming,
heat treatment of the blank to achieve increased hardness,
reducing the hardness of the shank (3) in a softening section (12) starting from an axial section of the shank (3) in which the threaded end (9) facing away from the head (2) is later located and extending in the axial direction only over part of an axial section of the shank (3) in which the threaded portion (5) is later located such that the softening section (12) has a reduced hardness by at least 50 HV compared to an axial central section (11) of the threaded section (5), and
making the threaded portion (5) by forming a thread (6) in the section of the shank (3).

11. Method according to claim 10, **characterized in that** the reduction in hardness is achieved by inductive heating of the blank.

12. Method according to claim 10 or 11, **characterized in that** the inductive heating is carried out at a frequency of between approximately 20 kHz and 500 kHz, in particular between approximately 100 kHz and 400 kHz, and/or over a period of time of between approximately 0.05 s and 30 s, in particular between approximately 0.1 s and 10 s.

13. Method according to at least one of claims 10 to 12, **characterized in that** the heat treatment of the blank to achieve the increased hardness comprises bainitisation to produce a bainite structure.

14. Process according to at least one of claims 10 to 13, **characterized in that** the reduction of the hardness is effected by heating the blank with a laser.

## Revendications

1. Vis à haute résistance (1) comprenant une tête (2) et un tronçon fileté (5) avec un filetage (6) doté d'une extrémité de filetage (9) dirigée en éloignement de la tête (2) en direction axiale,
**caractérisée en ce que** le tronçon fileté (5) présente une zone de plus faible dureté (12), qui part de l'extrémité de filetage (9) qui s'étend en direction axiale, dans laquelle la zone de plus faible dureté (12) présente une dureté réduite d'au moins 50 HV par comparaison à une zone axiale médiane (11) du tronçon fileté (5).

2. Vis (1) selon la revendication 1, **caractérisée en ce que** la dureté de la zone de plus faible dureté (12) est plus faible par comparaison à la zone axiale médiane (11) du tronçon fileté (5) d'une valeur environ entre 50 HV et 300 HV, en particulier entre 100 HV et 250 HV.

3. Vis (1) selon l'une au moins des revendications précédentes, **caractérisée en ce que** la résistance à la traction de la zone de plus faible dureté (12) est plus faible par comparaison à la zone axiale médiane (11) du tronçon fileté (5) d'au moins 100 N/mm².

4. Vis (1) selon la revendication 3, **caractérisée en ce que** la résistance à la traction de la zone de plus faible dureté (12) et plus faible par comparaison à la zone axiale médiane (11) du tronçon fileté (5) d'une valeur environ entre 100 N/mm² et 700 N/mm², en particulier entre 200 N/mm² et 500 N/mm².

5. Vis (1) selon l'une au moins des revendications précédentes, **caractérisée en ce que**
la dureté de la zone de plus faible dureté (12) est plus faible par comparaison à la zone axiale médiane (11) du tronçon fileté (5) d'une valeur environ entre 15 % et 50 %, en particulier entre 20 % et 40 %, et/ou la résistance à la traction de la zone de plus faible dureté (12) est plus faible par comparaison à la zone axiale médiane (11) du tronçon fileté (5) d'une valeur environ entre 15 % et 50 %, en particulier entre 20 % et 40 %.

6. Vis (1) selon l'une au moins des revendications précédentes, **caractérisée en ce que** la zone de plus faible dureté (12) s'étend sur une longueur égale à au moins le double, en particulier au moins le triple, du pas du filetage (6).

7. Vis (1) selon la revendication 6, **caractérisée en ce que** la longueur de la zone de plus faible dureté (12) correspond au maximum à huit fois, en particulier au maximum à sept fois, et en particulier au maximum à six fois le pas du filetage (6).

8. Vis (1) selon l'une au moins des revendications précédentes, **caractérisée en ce que** le filetage (6) présente, dans la zone de plus faible dureté (12), la réalisation normalisée habituelle, et **en ce qu'**en particulier aucun perçage n'est ménagé à cet endroit.

9. Vis (1) selon l'une au moins des revendications précédentes, **caractérisée en ce que** la vis (1) présente une structure bainitique.

10. Procédé pour réaliser une vis à haute résistance (1) selon l'une au moins des revendications précédentes, comprenant les étapes consistant à :
réaliser une ébauche avec une tête (2) et une tige (3) par déformation,
traiter à chaud l'ébauche pour atteindre une augmentation de la dureté,
réduire la dureté de la tige (3) dans une zone de plus faible dureté (12) qui part d'une zone axiale de la tige (3) dans laquelle se trouve plus tard l'extrémité du filetage (9) dirigée en éloignement de la tête (2) et qui s'étend en direction axiale seulement sur une partie d'une zone axiale de la tige (3) dans laquelle se trouve plus tard le tronçon fileté (5) de telle manière que la zone de plus faible dureté (12) présente par comparaison à une zone axiale médiane (11) du tronçon fileté (5) une dureté réduite d'au moins 50 HV, et
réaliser le tronçon fileté (5) par déformation d'un pas de vis (6) dans la zone de la tige (3).

11. Procédé selon la revendication 10, **caractérisé en ce que** la réduction de la dureté a lieu par échauffement de l'ébauche par induction.

12. Procédé selon la revendication 10 ou 11, **caractérisé en ce que** l'échauffement par induction
a lieu avec une fréquence entre environ 25 kHz et 500 kHz, en particulier entre environ 100 kHz et 400 kHz, et/ou
a lieu sur une durée entre environ 0,05 s et 30 s, en particulier entre environ 0,1 s et 10 s.

13. Procédé selon l'une au moins des revendications 10 à 12, **caractérisé en ce que** le traitement thermique de l'ébauche pour atteindre l'augmentation de dureté comprend une étape de bainitisation pour engendrer une structure bainitique.

14. Procédé selon l'une au moins des revendications 10 à 13, **caractérisé en ce que** la réduction de la dureté a lieu par échauffement de l'ébauche au moyen d'un laser.
